# EUROPÄISCHE PATENTSCHRIFT

(11) **EP 1 140 568 B1**
(45) Veröffentlichungstag und Bekanntmachung des Hinweises auf die Patenterteilung: **19.03.2003**
(21) Anmeldenummer: 99964460.2
(22) Anmeldetag: 17.12.1999
(51) Int. Cl.: B60R 21/16

(54) **AIRBAGMODUL**
AIRBAG MODULE
MODULE SAC GONFLABLE

(30) Priorität: 30.12.1998 DE 19860933
(43) Veröffentlichungstag der Anmeldung: 10.10.2001
(73) Patentinhaber: TAKATA - PETRI Aktiengesellschaft, 63743 Aschaffenburg (DE); AUDI AG, 85057 Ingolstadt (DE)
(72) Erfinder: ECKERT, Nick, D-12587 Berlin (DE); HAASE, Carsten, D-33739 Bielefeld (DE); KAMM, Martin, D-13469 Berlin (DE); RION, Claude, D-85051 Ingolstadt (DE); SPIES, Udo, D-85080 Gaimersheim (DE); NEFF, Martin, D-85055 Ingolstadt (DE)
(74) Vertreter: Müller, Wolfram Hubertus, Dr. Dipl.-Phys.
(86) Internationale Anmeldenummer: DE9904101
(87) Internationale Veröffentlichungsnummer: WO00040440

(56) Entgegenhaltungen:
- US-A- 3 897 961
- US-A- 5 602 734
- US-A- 5 772 238
- PATENT ABSTRACTS OF JAPAN vol. 012, no. 289 (M-728), 8. August 1988 (1988-08-08) & JP 63 064851 A (MICHIHIRO KANNONJI), 23. März 1988 (1988-03-23)

## Beschreibung

Die Erfindung betrifft ein Airbagmodul, insbesondere Beifahrer-Airbagmodul nach dem Oberbegriff des Anspruchs 1.

Es ist üblich, daß Airbagmodule direkt vor dem Insassen im Fahrzeug eingebaut sind, da der gefüllte Gassack seine Schutzfunktion bei einem Frontalaufprall symmetrisch zur Körpermittelachse des Insassen erfüllt. Es ist deshalb bekannt, den Fahrerairbag im Lenkrad und den Beifahrerairbag vor dem Insassen in der Armaturentafel anzuordnen. Da aber zunehmend der Wunsch besteht, den für den Beifahrerairbag bisher benutzten Bereich der Armaturentafel für andere Zwecke zu verwenden, müßte das Airbagmodul an anderer Stelle angeordnet werden.

Aus dem gattungsbildenden US-Patent 5 602 734 ist ein Beifahrer-Airbagmodul bekannt, das im Dachbereich vor dem Insassen angeordnet ist. Der Gassack ist so ausgeführt, daß er sich nahezu gleichzeitig von oben nach unten an der Windschutzscheibe und in Richtung des Insassen entfaltet. Dabei wird im wesentlichen nur der Kopf- und Halsbereich des Insassen durch den Gassack im Crashfall geschützt, d.h., es wird nicht der gesamte zur Verfügung stehende Raum vor dem Insassen zu dessen Beteiligung an der Fahrzeugverzögerung genutzt. Weiterhin besteht dadurch die Gefahr, daß ein zu weit vorn sitzender Insasse von dem sich entfaltenden Gassack am Kopf angeschossen wird, was erhebliche Verletzungen zur Folge haben kann.

Der Erfindung liegt die Aufgabe zugrunde, ein Airbagmodul bereitzustellen, bei dem der Gassack nach der Entfaltung den Raum vor dem Insassen zumindest weitestgehend ausfüllt und der eine Entfaltungstrajektorie aufweist, die den Gassack bei der Entfaltung ohne Gefahr auch für einen weit vorn sitzenden Insassen aus der Position über dem Inssaen in eine Position vor dem Insassen bringt.

Erfindungsgemäß wird das gemäß den Merkmalen des Anspruchs 1 erreicht.

Bei einem Airbagmodul, insbesondere Beifahrer-Airbagmodul, der im Dachbereich eines Kraftfahrzeuges vor dem Insassen angeordnet ist und mindestens ein Modulgehäuse und einen Gassack aufweist, dem ein Gasgenerator zugeordnet ist, ist erfindungsgemäß das Modulgehäuse so angeordnet, daß dessen Öffnung für den Austritt des Gassacks im Crashfall in Richtung der Windschutzscheibe weist. Weiterhin weist der Gassack zwei Abschnitte auf, von denen der erste ein sich in der ersten Phase der Entfaltung von oben nach unten entlang der Windschutzscheibe entfaltender Abschnitt ist, und der zweite sich anschließende ein sich in Richtung der Körperpartie des Insassen unterhalb seines Kopfes entfaltender abgewinkelter Abschnitt darstellt, wobei der erste Abschnitt im entfalteten Zustand eine geringere Ausdehnung in Richtung des Insassen aufweist als der zweite Abschnitt.

Der Vorteil dieser Anordnung besteht darin, daß der Kopf des Insassen bei der Entfaltung des Gassacks mit dem ersten Abschnitt wegen dessen geringer Ausdehnung in Richtung des Insassen nicht in Berührung kommt. Auch mit dem zweiten Abschnitt kann der Kopf während der Entfaltung nicht in Berührung kommen, da dieser Abschnitt auf die Körperpartie unterhalb des Kopfes ausgerichtet ist und den gesamten Raum zwischen dem Insassen und der Armaturentafel ausfüllt. Selbst bei einem weit vorn sitzenden Insassen würde deshalb bei einem Aufprall zunächst der Thorax durch den Gassack abgestützt. Dadurch macht der Oberkörper des Insassen eine Kippbewegung nach vorn und erst dann, d.h., wenn der Entfaltungsvorgang bereits abgeschlossen ist, taucht er mit dem Kopf in den hinteren Teil des zweiten Abschnitts ein.

Es ist zweckmäßig, daß der erste Abschnitt eine solche Länge aufweist, daß er sich im entfalteten Zustand entlang der Windschutzscheibe zumindest bis nahezu auf die Armaturentafel erstreckt, und daß der zweite Abschnitt eine solche Größe aufweist, daß er im entfalteten Zustand zumindest den Thorax-Bereich des Insassen bedeckt.

Vorzugsweise schließt sich der zweite Abschnitt an den ersten Abschnitt unter einem Winkel von annähernd 90° an.

In einer Ausführungsform ist vorgesehen, daß der Gassack im Bereich seiner Anbindung an das Modulgehäuse eine Tasche aufweist, deren Vorderkante quer bezüglich des Insassen durch den Gassack verläuft, seitliche Überströmöffnungen aufweist und mit gegenüberliegenden Seiten des Gassacks verbunden ist. Weiterhin ist in dem sich an die Tasche anschließenden Abschnitt die dem Insassen zugekehrte Seite des Gassacks mit der Rückseite des Gassacks zumindest in dem Bereich verbunden, die im entfalteten Zustand des Gassacks dem Kopf des Insassen gegenüberliegt. Die Tasche hat einerseits die Aufgabe, die Ausdehnung des Gassacks in Richtung des Insassen zu begrenzen. Sie hat also die Funktion eines Fangbandes. Andererseits soll sie die davor liegende Verbindungsstelle zwischen Vorder- und Rückseite des Gassacks vor dem aggressiven Gasstrahl schützen. Diese Verbindungstelle, die auch als Kopfabnäher bezeichnet wird, soll die Ausdehung des Gassacks in Richtung des Insassen an dieser Stelle völlig verhindern, um eine überhöhte Nackenextension des Insassen zu vermeiden. Vorzugsweise ist die dem Insassen zugekehrte Seite mit der Rückseite des Gassacks durch einen kreisförmigen Abnäher verbunden.

Es ist zweckmäßig, daß am Übergang zwischen dem ersten und dem zweiten Abschnitt mindestens ein Band zwischen der dem Insassen zugekehrten Seite des Gassacks und der gegenüberliegenden Seite zur Erzielung der abgewinkelten Lage des zweiten Abschnitts gegenüber dem ersten Abschnitt vorgesehen ist.

In einer bevorzugten Ausführungsform ist der Gassack als 2D-Gassack ausgebildet, der aus einer Unter- und einer Oberplatte zusammengesetzt ist, wobei die Unterplatte im entfalteten Zustand dem Insassen zugewandt ist. Weiterhin ist die Tasche mit der Unter- und Oberplatte verbunden, so daß sich ein Fangband bildet. Als Flammschutz für die Tasche und den erwähnten Verbindungsstellen kann im Inneren eine zweite Tasche angeordnet sein. An der Unterplatte ist am Übergang zwischen dem ersten und dem zweiten Abschnitt durch Raffen ein Umlenkband gebildet, das innen an der Oberplatte befestigt ist. Das Umlenkband, das die abgewinkelte Lage des zweiten Abschnitts gegenüber dem ersten Abschnitt gewährleistet, ist in diesem Fall also kein gesondertes Teil sondern Teil der Unterplatte. Das Umlenkband ist vorzugsweise in der Mitte des Gassacks vorgesehen, so daß seitlich das Gas in den zweiten Abschnitt strömen kann. Um das Einströmen des Gases in den zweiten Teil des Gassacks zu verbessern, ist es zweckmäßig, die seitlichen Bereiche des Umlenkbandes abzutrennen.

Es ist weiterhin zweckmäßig, daß das Ende des zweiten Abschnitts des Gassacks im nicht entfalteten Zustand mit dem ersten Abschnitt durch eine Reißnaht verbunden ist, wobei diese vorzugsweise im Bereich des Kopfabnähers vorgesehen ist. Dadurch wird die Entfaltungstrajektorie des Gassacks weiter optimiert. Die Reißnaht ist so bemessen, daß sie am Kopfabnäher abreißt, nachdem sich der erste Abschnitt entlang der Windschutzscheibe entfaltet hat.

Das Gehäuse des Aibagmoduls ist vorzugsweise im Bereich der Sonnenblende des Beifahrersitzes angeordnet und weist zweckmäßig nur etwa eine dem Durchmesser eines quer zum Insassen angeordneten Rohrgasgenerators entsprechende Höhe auf.

Der Gassack ist vorzugsweise im Bereich des Gasgenerators befestigt und im gefaltetem Zustand vor diesem gelagert.

Eine weitere Verbesserung der Entfaltungstrajektorie wird dadurch erreicht, daß bei dem gefalteten Gassack die dem Insassen zugekehrte Seite partiell gerafft ist, das ungefaltete dem Insassen zugekehrte Ende des Gassacks über dem gerafften Teil liegt und am Kopfabnäher mit einer Reißnaht befestigt ist und daß der Gassack für das Verstauen im Gehäuse zusätzlich gerafft ist.

Die Erfindung soll in Ausführungsbeispielen anhand von Zeichnungen erläutert werden. Es zeigen:
- Fig. 1: Die Einbauposition des Airbagmoduls und die Entfaltungstrajektorie des Gassacks,
- Fig. 2: eine Draufsicht auf den ausgebreiteten Gassack;
- Fig. 3: einen Schnitt durch die Fig. 2 entlang der Linie III - III;
- Fig. 4: einen Schnitt durch das Airbagmodul
- Fig. 5.1 bis 5.3: den Ablauf einer speziellen Gassackfaltung;
- Fig. 6.1 bis 6.4: den Ablauf der Gassackentfaltung;
- Fig. 7a bis 9b: Ausführungsformen des Airbagmoduls.

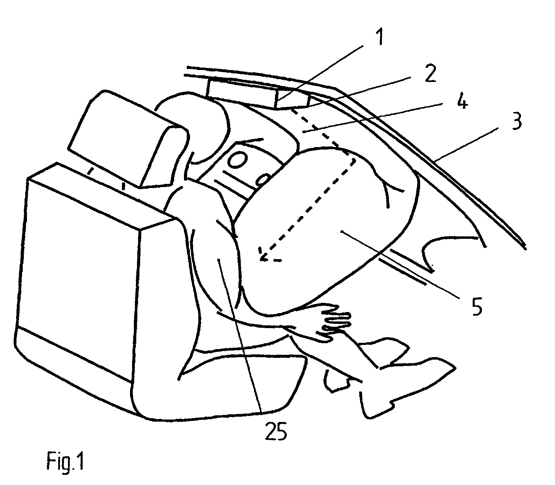

Das Gehäuse 1 des erfindungsgemäßen Airbagmoduls ist im Bereich der Sonnenblende für den Beifahrer untergebracht. Das Airbagmodul ist dort so angebracht, daß die Öffnung 2 des Airbagmoduls für den Gassackaustritt in Richtung der Windschutzscheibe 3 weist. Der Pfeil in der Fig. 1 zeigt die Entfaltungstrajektorie. Es ist erkennbar, daß sich zunächst ein erster Abschnitt 4 des Gassacks entlang der Windschutzscheibe 3 entfaltet und daß sich anschließend ein zweiter Abschnitt 5 in Richtung des Insassen 25 entfaltet. Auf diesen Entfaltungsvorgang wird später noch näher eingegangen.

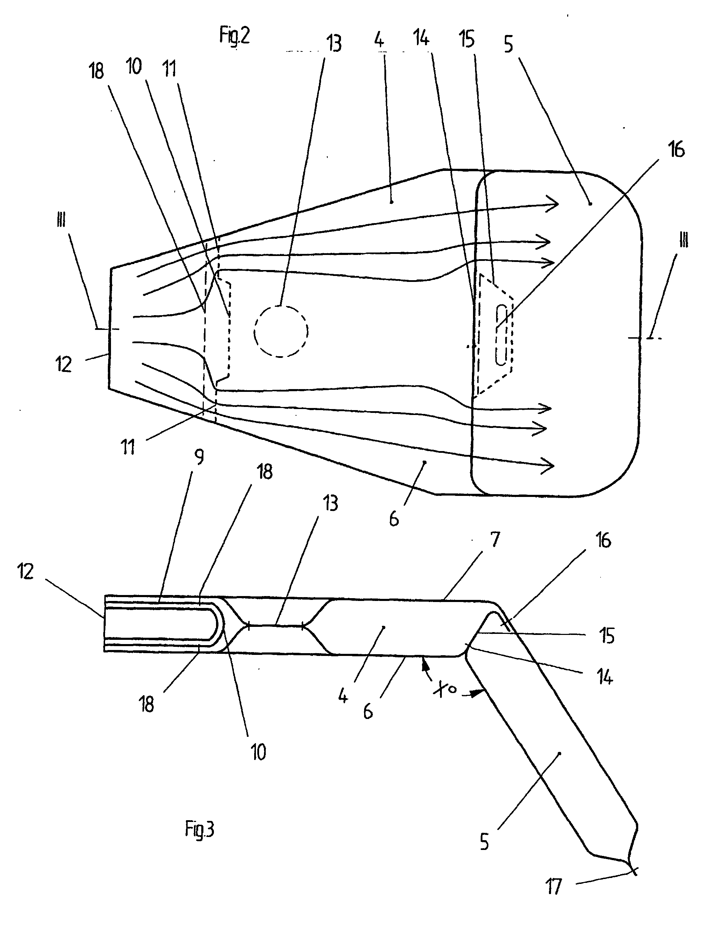

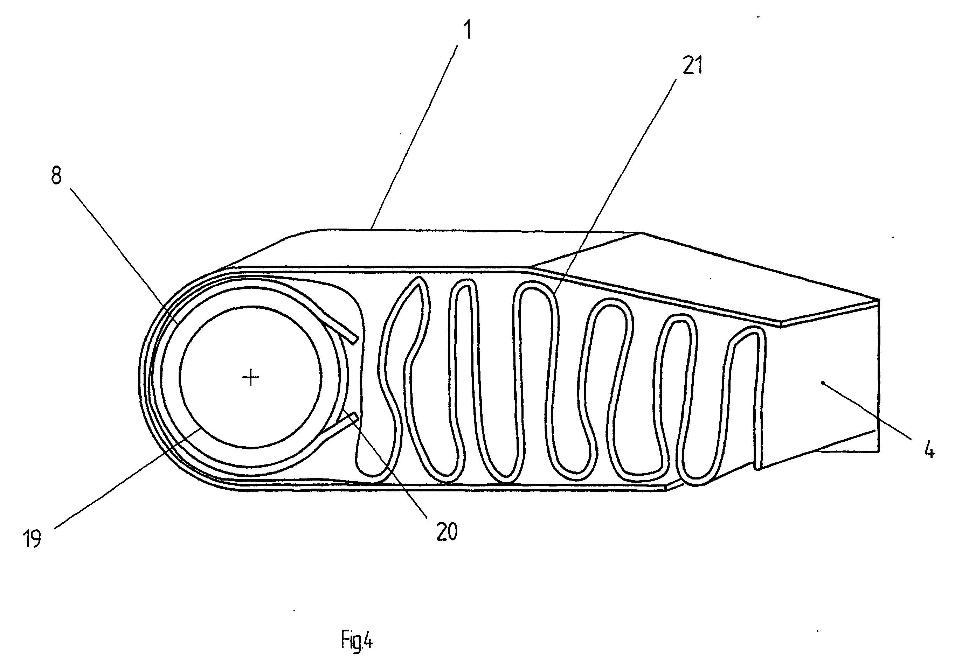

In den Figuren 2 und 3 ist der prinzipielle Aufbau des Gassacks dargestellt. Es ist ein 2D-Gassack dargestellt, der aus einer Unterplatte 6 und einer Oberplatte 7 zusammengesetzt ist, die am Umfang mittels einer Naht 17 miteinander vernäht sind. An einer offenen Seite 12 ist der Gassack mit einem Diffusor 8 verbunden (Fig. 4). An dieser Seite des Gassacks ist in diesem eine Tasche 9 vorgesehen, deren Vorderkante 10 quer bezüglich des Insassen verläuft und die seitlich überströmöffnungen 11 aufweist. In Strömungsrichtung der aus dem Gasgenerator austretenden Gase ist hinter der Tasche 9 ein kreisförmiger Kopfabnäher 13 vorgesehen, der die Unter- und Oberplatte 6, 7 miteinander verbindet. Die Tasche 9 soll einerseits die Ausdehnung des Gassacks in Richtung des Insassen beschränken, indem sie durch Nähte 18 mit der Unter- und Oberplatte verbunden ist, d.h., sie hat eine Fangbandfunktion, und andererseits soll sie den Kopfabnäher 13 vor dem aggressiven Gasstrahl schützen. Der Kopfabnäher soll die Ausdehnung des Gassacks in Richtung des Insassen an dieser Stelle vollständig verhindern, um eine überhöhte Nackenextension des Insassen zu vermeiden.

Durch Raffen und Zusammennähen der Unterplatte 6 mittels einer Naht 14 über die gesamte Gassackbreite wird ein Umlenkband 15 gebildet, das an der Oberplatte 7 innen mittels einer Naht 16 festgenäht wird. Dadurch wird der Gassack in die zwei Abschnitte 4, 5 unterteilt, die unter einem Winkel X^{o} zueinander verlaufen. Aus der Fig. 2 ist erkennbar, daß das Umlenkband 15 nur in der Mitte des Gassacks vorgesehen ist und daß das Gas seitlich an diesem in den zweiten Abschnitt 5 des Gassacks vorbeigeleitet wird.

In der Fig. 4 ist das Aibagmodul mit dem gefalteten Gassack im Schnitt dargestellt. Im Gehäuse 1 ist ein Rohrgasgenerator 19, der vom Diffusor 8 umgeben ist , quer zum Insassen angeordnet. Der Diffusor 8 weist in Richtung des Insassen Öffnungen 20 auf. Der am Diffusor befestigte Gassack 21 liegt in gefalteter Lage vor dem Diffusor 8.

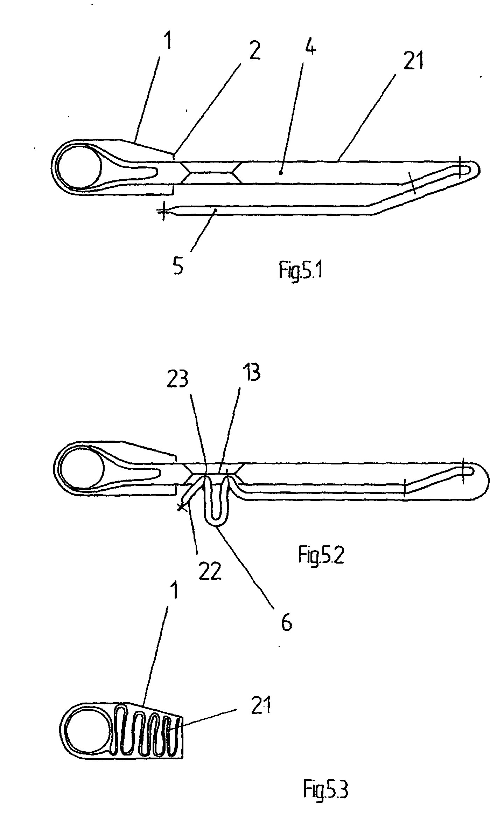

Die Faltung des Gassacks 21 erfolgt in der Weise, daß der vormontierte Gassack 21, wie in der Fig. 5.1 dargestellt, ausgebreitet wird. Dann wird das Gassackende partiell gerafft, wie in Fig. 5.2 dargestellt, und das Ende 22 des Gassacks 21 mittels einer Reißnaht 23 am Kopfabnäher 13 befestigt. Anschließend wird der Gassack in das Gehäuse 1 eingeschoben, so daß er in diesem die in den Figuren 4 und 5.3 dargestellte Lage einnimmt.

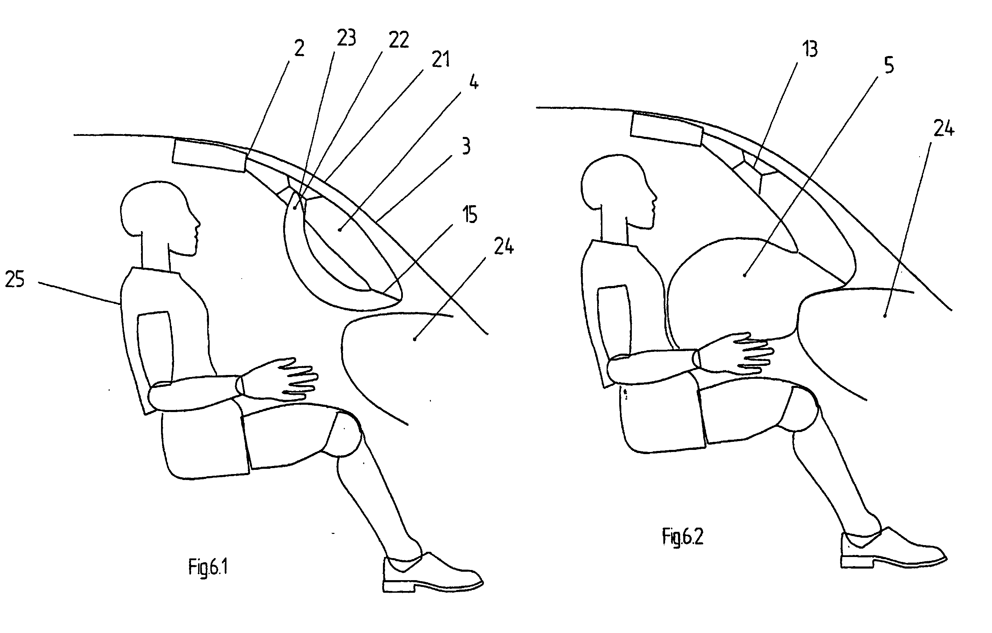

Aus den Figuren 6.1 bis 6.4 ist der Entfaltungsvorgang ersichtlich. Der Gassack 21 tritt nach der Zündung des Gasgenerators aus der Öffnung 2 aus, wobei sich zunächst der erste Abschnitt 4 entlang der Windschutzscheibe 3 bis zur Armaturentafel 24 entfaltet. In dieser Entfaltungsphase bleibt das Ende 22 noch am Kopfabnäher 13 befestigt (Fig. 6.1). Es ist erkennbar, daß sich der Gassack in dieser Entfaltungsphase nur geringfügig in Richtung des Insassen 25 entfaltet. Dadurch ist die Gefahr für einen weit vorn sitzenden Insassen gering, in der Entfaltungsphase mit dem Kopf auf den Gassack zu prallen.

Nachdem der erste Abschnitt 4 entfaltet ist, reißt die Reißnaht 23 am Kopfabnäher 13 und der zweite Abschnitt 5 wird um einen Winkel von ca. 90° in Richtung des Thorax des Insassen 25 umgelenkt und füllt sich im Raum zwischen diesem und der Armaturentafel 24 (Fig. 6.2). Es ist erkennbar, das der zweite Abschnitt 5 des Gassacks diesen Raum vollständig ausfüllt. Wenn sich nun der Insasse infolge des Fahrzeugaufpralls nach vorn bewegt, wird deshalb zunächst der Thorax durch den Gassack abgestützt, wie es aus Fig. 6.3 ersichtlich ist. Als Folge dieser Abstützung macht der Oberkörper des Insassen eine Kippbewegung nach vorn und taucht mit dem Kopf am Kopfabnäher 13 vorbei in den hinteren Teil des zweiten Abschnitts 5 des Gassacks, wie es in Fig. 6.4 dargestellt ist.

Mit diesem erfindungsgemäßen Airbagmodul wird nicht nur der bisher hierfür vorgesehene Raum unterhalb der Armaturentafel für andere Einbauten frei, sondern es wird weiterhin auch ein verbesserter Schutz für den Insassen im Crashfall erzielt, insbesondere vor allem für einen weit vorn sitzenden Insassen.

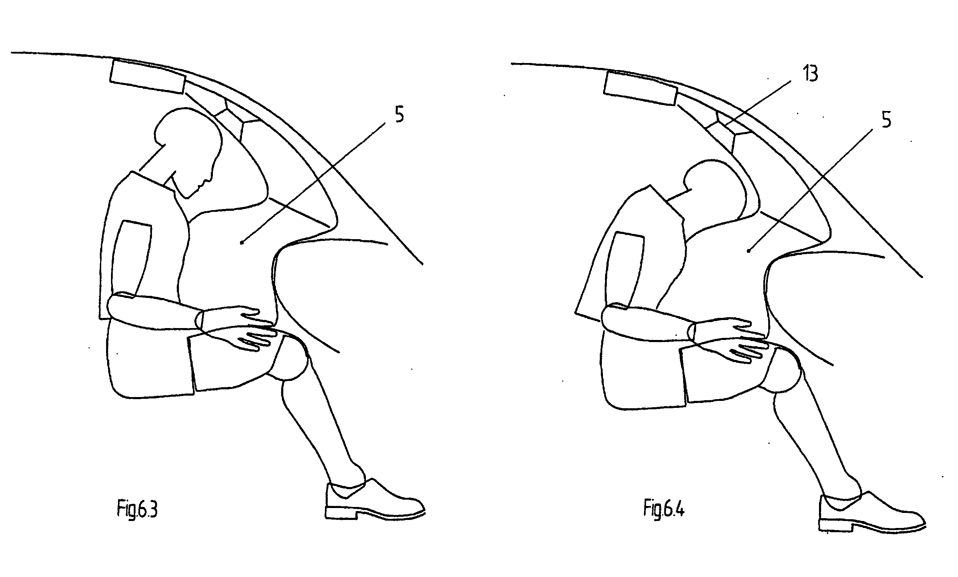

In den Figuren 7a bis 9b sind Ausführungsformen des Airbagmoduls dargestellt. In den Figuren 7a und 7b ist ein Airbagmodul mit einem rechteckförmigen Gehäuse 30 dargestellt, in dem der Rohrgasgenerator 19 mit dem Diffusor 8 angeordnet ist. Weiterhin ist in dem Gehäuse 30 der gefaltete Gassack 21 angeordnet.

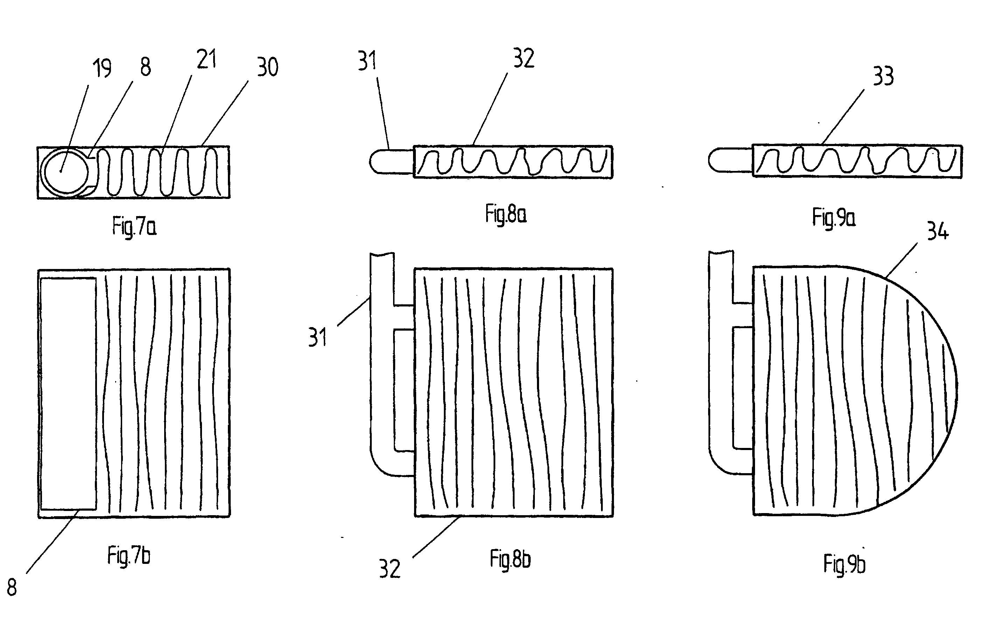

In den Figuren 8a und 8b ist ein Airbagmodul dargestellt, bei dem eine externe Gasquelle vorgesehen ist, die in den Figuren nicht dargestellt ist. Diese Gasquelle ist über eine Rohrleitung 31 mit einem Gehäuse 32 des Airbagmoduls verbunden.

Die Ausführungsform der Figuren 9a und 9b entspricht im wesentlichen der Ausführungsform der Figuren 8a und 8b. Der Unterschied besteht darin, daß ein Gehäuse 33 vorgesehen ist, das eine abgerundete Kante 34 aufweist, in der die Austrittsöffnung für den Gassack vorgesehen ist.

## Patentansprüche

1. Airbagmodul, das im Dachbereich eines Kraftfahrzeuges vor dem Insassen angeordnet ist und mindestens ein Modulgehäuse (1) und einen Gassack (21) aufweist, dem ein Gasgenerator (19) zugeordnet ist, wobei
das Modulgehäuse (1) so angeordnet ist, daß dessen Öffnung (2) für den Austritt des Gassacks (21) im Crashfall in Richtung der Windschutzscheibe (3) weist, und der Gassack (21) zwei Abschnitte (4, 5) aufweist, von denen der erste (4) ein sich in der ersten Phase der Entfaltung von oben nach unten entlang der Windschutzscheibe (3) entfaltender Abschnitt ist, **dadurch gekennzeichnet, daß** der zweite (5) sich anschließende Abschnitt einen sich in Richtung der Körperpartie des Insassen (25) unterhalb seines Kopfes entfaltender abgewinkelter Abschnitt darstellt, wobei der erste Abschnitt (4) im entfalteten Zustand eine geringere Ausdehnung in Richtung des Insassen (25) aufweist als der zweite Abschnitt (5).

2. Airbagmodul nach Anspruch 1, **dadurch gekennzeichnet, daß** der erste Abschnitt (4) eine solche Länge aufweist, daß er sich im entfalteten Zustand entlang der Windschutzscheibe (3) zumindest bis nahezu auf die Armaturentafel (24) erstreckt, und daß der zweite Abschnitt (5) eine solche Größe aufweist, daß er im entfalteten Zustand zumindest den Thorax-Bereich des Insassen (25) bedeckt.

3. Airbagmodul nach Anspruch 1 oder 2, **dadurch gekennzeichnet, daß** sich der zweite Abschnitt (5) an den ersten Abschnitt (4) unter einem Winkel von annähernd 90° anschließt.

4. Airbagmodul nach mindestens einem der vorhergehenden Ansprüche, **dadurch gekennzeichnet, daß** der Gassack (21) im Bereich seiner Anbindung an das Modulgehäuse (1) eine Tasche (9) aufweist, deren Vorderkante (10) quer bezüglich des Insassen (25) durch den Gassack (21) verläuft, seitliche Überströmöffnungen (11) aufweist und mit gegenüberliegenden Seiten (6, 7) des Gassacks (21) verbunden ist, daß in dem sich an die Tasche (9) anschließenden Abschnitt die dem Insassen zugekehrte Seite des Gassacks mit der Rückseite des Gassacks zumindest in dem Bereich verbunden ist, die im entfalteten Zustand des Gasasacks dem Kopf des Insassen gegenüberliegt.

5. Airbagmodul nach Anspruch 4, **dadurch gekennzeichnet, daß** die dem Insassen zugekehrte Seite (6) mit der Rückseite (7) des Gassacks (21) durch einen kreisförmigen Abnäher (13) verbunden ist.

6. Airbagmodul nach mindestens einem der vorhergehenden Ansprüche, **dadurch gekennzeichnet, daß** am Übergang zwischen dem ersten (4) und dem zweiten Abschnitt (5) mindestens ein Band (15) zwischen der dem Insassen zugekehrten Seite (6) des Gassacks und der gegenüberliegenden Seite (7) zur Erzielung der abgewinkelten Lage des zweiten Abschnitts (5) gegenüber dem ersten Abschnitt (4) vorgesehen ist.

7. Airbagmodul nach mindestens einem der vorhergehenden Ansprüche, **dadurch gekennzeichnet, daß** der Gassack ein 2 D-Gassack ist, der aus einer Unter- (6) und einer Oberplatte (7) zusammengesetzt ist, wobei die Unterplatte (6) im entfalteten Zustand dem Insassen (25) zugewandt ist, daß die Tasche (9) mit der Unter- (6) und Oberplatte (7) verbunden ist, daß an der Unterplatte (6) am Übergang zwischen dem ersten (4) und dem zweiten Abschnitt (5) durch Raffen ein Umlenkband (15) gebildet ist, das innen an der Oberplatte (7) befestigt ist.

8. Airbagmodul nach Anspruch 7, **dadurch gekennzeichnet, daß** das Umlenkband (15) in der Mitte des Gassacks (21) vorgesehen ist.

9. Airbagmodul nach mindestens einem der vorhergehenden Ansprüche, **dadurch gekennzeichnet, daß** das Ende des zweiten Abschnitts (5) des Gassacks (21) im nicht entfalteten Zustand mit dem ersten Abschnitt (4) durch eine Reißnaht (23) verbunden ist.

10. Airbagmodul nach Anspruch 9, **dadurch gekennzeichnet, daß** die Reißnaht (23) im Bereich des Kopfabnähers (13) vorgesehen ist.

11. Airbagmodul nach mindestens einem der vorhergehenden Ansprüche, **dadurch gekennzeichnet, daß** das Gehäuse (1) des Airbagmoduls im Bereich der Sonnenblende des Beifahrersitzes angeordnet ist.

12. Airbagmodul nach mindestens einem der vorhergehenden Ansprüche, **dadurch gekennzeichnet, daß** das Gehäuse (1) des Airbagmoduls etwa eine dem Durchmesser eines quer zum Insassen angeordneten Rohrgasgenerators (19) entsprechende Höhe aufweist.

13. Airbagmodul nach mindestens einem der vorhergehenden Ansprüche, **dadurch gekennzeichnet, daß** der Gassack (21) im Bereich des Gasgenerators (19) befestigt ist und im gefaltetem Zustand vor diesem gelagert ist.

14. Airbagmodul nach mindestens einem der vorhergehenden Ansprüche, **dadurch gekennzeichnet, daß** bei dem gefalteten Gassack (21) die dem Insassen zugekehrte Seite (6) partiell gerafft ist, das ungefaltete dem Insassen zugekehrte Ende (22) des Gassacks (21) über dem gerafften Teil liegt und am Kopfabnäher (13) mit einer Reißnaht (23) befestigt ist und daß der Gassack (21) für das Verstauen im Gehäuse (1) zusätzlich gerafft ist.

## Claims

1. Airbag module which is arranged in the roof region of a motor vehicle in front of the occupant and has at least one module housing (1) and a gas bag (21) to which a gas generator (19) is assigned, where
the module housing (1) is arranged in such a manner that its opening (2) for the emergence of the gas bag (21) in the event of a crash points in the direction of the windscreen (3), and the gas bag (21) has two sections (4, 5) of which the first (4) is a section which, in the first phase of the deployment, deploys from the top downwards along the windscreen (3), **characterized in that** the second section (5), which adjoins it, constitutes an angled section which deploys in the direction of the body portion of the occupant (25) below his head, where the first section (4), when deployed, has a smaller degree of expansion in the direction of the occupant (25) than the second section (5).

2. Airbag module according to Claim 1, **characterized in that** the first section (4) is of such a length that, when deployed, it extends along the windscreen (3) at least virtually as far as the dashboard (24), and **in that** the second section (5) is of such a size that, when deployed, it covers at least the chest region of the occupant (25).

3. Airbag module according to Claim 1 or 2, **characterized in that** the second section (5) adjoins the first section (4) at an angle of approximately 90°.

4. Airbag module according to at least one of the preceding claims, **characterized in that**, in the region of its connection to the module housing (1), the gas bag (21) has a pocket (9) whose front edge (10) runs through the gas bag (21) transversely with respect to the occupant (25), has lateral overflow openings (11) and is connected to opposite sides (6, 7) of the gas bag (21), **in that**, in the section adjoining the pocket (9), that side of the gas bag which faces the occupant is connected to the rear side of the gas bag at least in the region which lies opposite the occupant's head when the gas bag is deployed.

5. Airbag module according to Claim 4, **characterized in that** the side (6) which faces the occupant is connected to the rear side (7) of the gas bag (21) by a circular dart (13).

6. Airbag module according to at least one of the preceding claims, **characterized in that,** at the transition between the first (4) and the second section (5), at least one band (15) is provided between that side (6) of the gas bag which faces the occupant and the opposite side (7), in order to obtain the angled position of the second section (5) with respect to the first section (4).

7. Airbag module according to at least one of the preceding claims, **characterized in that** the gas bag is a 2D gas bag which is composed of a lower panel (6) and an upper panel (7), with the lower panel (6), when deployed, facing the occupant (25), **in that** the pocket (9) is connected to the lower panel (6) and upper panel (7), **in that** on the lower panel (6), at the transition between the first (4) and the second section (5), there is formed, by gathering, a deflecting band (15) which is fastened onto the upper panel (7) on the inside.

8. Airbag module according to Claim 7, **characterized in that** the deflecting band (15) is provided in the centre of the gas bag (21).

9. Airbag module according to at least one of the preceding claims, **characterized in that** the end of the second section (5) of the gas bag (21), when not deployed, is connected to the first section (4) by a tear seam (23).

10. Airbag module according to Claim 9, **characterized in that** the tear seam (23) is provided in the region of the top dart (13).

11. Airbag module according to at least one of the preceding claims, **characterized in that** the housing (1) of the airbag module is arranged in the region of the sun visor of the front-passenger's seat.

12. Airbag module according to at least one of the preceding claims, **characterized in that** the housing (1) of the airbag module is approximately of a height which corresponds to the diameter of a tubular gas generator (19), which is arranged transversely to the occupant.

13. Airbag module according to at least one of the preceding claims, **characterized in that** the gas bag (21) is fixed in the region of the gas generator (19) and, when folded, is mounted in front of the latter.

14. Airbag module according to at least one of the preceding claims, **characterized in that**, when the gas bag (21) is folded, the side (6) which faces the occupant is partially gathered, that unfolded end (22) of the gas bag (21) which faces the occupant lies above the gathered part and is fastened to the top dart (13) by a tear seam (23), and **in that** the gas bag (21) is additionally gathered for stowage in the housing (1).

## Revendications

1. Module d'airbag agencé dans la zone de toiture d'un véhicule automobile en avant de l'occupant et comprenant au moins un boîtier de module (1) et un sac à gaz (21) auquel est associé un générateur de gaz (19), dans lequel le boîtier de module (1) est agencé de telle sorte que son ouverture (2) pour la sortie du sac à gaz (21) est dirigée, en cas de collision, en direction du pare-brise (3), et le sac à gaz (21) comprend deux tronçons (4, 5) dont le premier (4) est un tronçon qui se déploie pendant la première phase de déploiement depuis le haut vers le bas le long du pare-brise (3), **caractérisé en ce que** le deuxième tronçon (5) qui s'y raccorde représente un tronçon coudé qui se déploie en direction de la partie corporelle de l'occupant (25) au-dessous de sa tête, le premier tronçon (4) présentant, dans l'état déployé, un allongement inférieur en direction de l'occupant (25) à celui du deuxième tronçon (5).

2. Module d'airbag selon la revendication 1, **caractérisé en ce que** le premier tronçon (4) présente une longueur telle que dans l'état déployé il s'étend le long du pare-brise (3) au moins jusqu'à proximité du tableau de bord (24), et **en ce que** le deuxième tronçon (5) présente une taille telle que dans l'état déployé il recouvre au moins la zone du thorax de l'occupant (25).

3. Module d'airbag selon l'une ou l'autre des revendications 1 et 2, **caractérisé en ce que** le deuxième tronçon (5) se raccorde au premier tronçon (4) sous un angle d'environ 90°.

4. Module d'airbag selon l'une au moins des revendications précédentes, **caractérisé en ce que** le sac à gaz (21) présente, dans la zone de sa liaison avec le boîtier de module (1), une poche (9) dont l'arête avant (10) s'étend perpendiculairement à l'occupant (25) à travers le sac à gaz (21), présente des ouvertures de trop-plein latérales (11), et est reliée à des faces opposées (6, 7) du sac à gaz (21), **en ce que** dans le tronçon qui se raccorde à la poche (9), la face du sac à gaz tournée vers l'occupant est reliée à la face arrière du sac à gaz du moins dans cette zone qui est opposée à la tête de l'occupant dans l'état déployé du sac à gaz.

5. Module d'airbag selon la revendication 4, **caractérisé en ce que** la face (6) tournée vers l'occupant est reliée à la face arrière (7) du sac à gaz (21) par un pli cousu circulaire (13).

6. Module d'airbag selon l'une au moins des revendications précédentes, **caractérisé en ce qu'**il est prévu, à la transition entre le premier tronçon (4) et le deuxième tronçon (5), au moins une bande (15) entre la face (6) du sac à gaz tournée vers l'occupant et la face opposée (7) pour obtenir la position coudée du deuxième tronçon (5) par rapport au premier tronçon (4).

7. Module d'airbag selon l'une au moins des revendications précédentes, **caractérisé en ce que** le sac à gaz est un sac à gaz "2 D" qui est composé par une plaque inférieure (6) et par une plaque supérieure (7), la plaque inférieure (6) étant tournée vers l'occupant (25) dans l'état déployé, **en ce que** la poche (9) est reliée à la plaque inférieure (6) et à la plaque supérieure (7), **en ce qu'**une bande de renvoi (15) est formée par drapement sur la plaque inférieure (6) à la transition entre le premier tronçon (4) et le deuxième tronçon (5), bande qui est fixée à l'intérieur sur la plaque supérieure (7).

8. Module d'airbag selon la revendication 7, **caractérisé en ce que** la bande de renvoi (15) est prévue au milieu du sac à gaz (21).

9. Module d'airbag selon l'une au moins des revendications précédentes, **caractérisé en ce que** l'extrémité du deuxième tronçon (5) du sac à gaz (21) est reliée, dans l'état non déployé, au premier tronçon (4) par un cordon frangible (23).

10. Module d'airbag selon la revendication 9, **caractérisé en ce que** le cordon frangible (23) est prévu dans la zone du pli cousu de tête (13).

11. Module d'airbag selon l'une au moins des revendications précédentes, **caractérisé en ce que** le boîtier (1) du module d'airbag est agencé dans la zone du pare-soleil du siège du passager.

12. Module d'airbag selon l'une au moins des revendications précédentes, **caractérisé en ce que** le boîtier (1) du module d'airbag présente une hauteur qui correspond approximativement au diamètre d'un générateur de gaz tubulaire (19) agencé perpendiculairement à l'occupant.

13. Module d'airbag selon l'une au moins des revendications précédentes, **caractérisé en ce que** le sac à gaz (21) est fixé dans la zone du générateur de gaz (19) et est monté, dans l'état plié, en avant de celui-ci.

14. Module d'airbag selon l'une au moins des revendications précédentes, **caractérisé en ce que**, le sac à gaz (21) étant plié, la face (6) tournée vers l'occupant est partiellement drapée, l'extrémité non pliée (22) du sac à gaz (21) tournée vers l'occupant se trouve au-dessus de la partie drapée et est fixée sur le pli cousu de tête (13) par un cordon frangible (23), et **en ce que** le sac à gaz (21) est drapé en supplément pour le ranger dans le boîtier (1).
